# EUROPÄISCHE PATENTSCHRIFT

(11) **EP 0 929 613 B1**
(45) Veröffentlichungstag und Bekanntmachung des Hinweises auf die Patenterteilung: **10.05.2000**
(21) Anmeldenummer: 97919006.3
(22) Anmeldetag: 28.08.1997
(51) Int. Cl.: C09D 7/12, C08K 3/30

(54) **ZINKSULFID-PIGMENT**
ZINC SULPHIDE PIGMENT
PIGMENT AU SULFURE DE ZINC

(30) Priorität: 20.09.1996 DE 19638475
(43) Veröffentlichungstag der Anmeldung: 21.07.1999
(73) Patentinhaber: Metallgesellschaft Aktiengesellschaft, 60325 Frankfurt am Main (DE)
(72) Erfinder: AMIRZADEH-ASL, Djamschid, D-47445 Moers (DE); WINKLER, Jochen, D-47509 Rheurdt (DE)
(86) Internationale Anmeldenummer: EP9704681
(87) Internationale Veröffentlichungsnummer: WO9812271

(56) Entgegenhaltungen:
- CA-A- 967 708
- US-A- 3 672 830
- DATABASE WPI Week 9120 Derwent Publications Ltd., London, GB; AN 91-146938 XP002045353 & SU 1 574 538 A (LENINGRAD PLEKHANOV MINE) , 30.Juni 1990
- DATABASE WPI Week 8927 Derwent Publications Ltd., London, GB; AN 89-198643 XP002045354 & SU 1 428 758 A (LENINGRAD PLEKHANOV MINE) , 7.Oktober 1988
- CHEMICAL ABSTRACTS, vol. 110, no. 26, 26.Juni 1989 Columbus, Ohio, US; abstract no. 234105e, TARAKANOVA ET AL.: "Effect of the conditions of the heat treatment of zinc sulfide on its pigment properties" Seite 146; XP000180447 & LAKOKRAS. MATER. IKH PRIMEN. , Nr. 6, 1988,

## Beschreibung

Die Erfindung betrifft ein Verfahren zur Herstellung von Zinksulfid-Pigment und dessen Anwendung für den Einsatz in aus synthetischen organischen Polymeren gefertigten Formteilen, und in Beschichtungen wie Lacken, Farben, Fugen- und Dichtungsmassen mit guter Transparenz für den Bereich des sichtbaren Lichts, guter Remission von Infrarotstrahlung und guten Flammschutzeigenschaften.

Aus dem Firmenprospekt Nr. 1119596 der Sachtleben Chemie GmbH, Duisburg, ist ein Zinksulfid-Pigment bekannt, zu dessen Herstellung hochgereinigte Zinksalz- und Natriumsulfid-Lösungen verwendet werden. Das sehr feinteilig gefällte Zinksulfid wird durch Glühung bei ca. 700 °C auf die für das Lichtstreuvermögen optimale enge Kornverteilung mit einem Zentralwert bei ca. 0,3 µm gebracht. Die hohe Remission im sichtbaren Licht- und nahen Ultraviolett-Bereich ergibt einen neutralen Weißton sowie eine optimale Wirksamkeit mit Bezug auf das Streu- und Deckvermögen von Beschichtungen und ein optimales Aufhellvermögen in Kunststoffen. Aufgrund der Weißpigmenteigenschaften wird das Zinksulfid-Pigment da eingesetzt, wo organische oder anorganische Bindemittel für spezifische Anwendungen hochpigmentiert sein müssen, z. B. in Vorlacken, Fugen- und Dichtungsmassen, Grundierungen etc.. Ebenso werden Kunststoffe mit Zinksulfid pigmentiert, beispielsweise Melamin-, Harnstoff- und Polyester-Formmassen, wodurch diese sich ausgezeichnet einfärben lassen und zusätzlich gute Flammschutzeigenschaften erzielt werden. Die Wärmestabilität vieler Thermoplaste läßt sich durch Zinksulfid-Pigment günstig beeinflussen.

Aufgrund der relativ niedrigen Mohsschen Härte von 3 und der sphärischen Kornform besitzt Zinksulfid eine sehr geringe Abrasivität und verursacht daher bei der Verarbeitung keinen Metallabrieb. Zinksulfid wird im großen Umfang als Weißpigment in Kunststoffen eingesetzt, weil das alternativ als Weißpigment benutzte Titandioxid wegen seiner höheren Mohsschen Härte von 5,5 bis 6,5 im Unterschied zu Zinksulfid zum Brechen von Glasfasern führt.

Aufgabe der vorliegenden Erfindung ist es, Zinksulfid-Pigment für den Einsatz in aus synthetischen organischen Polymeren gefertigten Formteilen und in Beschichtungen, wie Lacken, Farben, Fugen- und Dichtungsmassen bereitzustellen, die nicht nur gute Flammschutzeigenschaften sondern auch eine gute Remission von Infrarotstrahlen bei gleichzeitig guter Transparenz im Bereich des sichtbaren Lichts besitzen sollen.

Gelöst ist diese Aufgabe dadurch, daß Sulfid-Schwefel enthaltende Verbindung mit einer wäßrigen, Zinkverbindung enthaltenden Lösung zusammengebracht, das gefällte Zinksulfid getrockent und 10 Minuten bis 4 Stunden bei einer Temperatur von 750 bis 1200 °C geglüht wird.

Durch Zugabe von 0 bis 30 Gew.%, vorzugsweise 0,5 bis 25 Gew.% Glühsalz, bezogen auf den Gehalt an Zinksulfid, läßt sich die Wachstumsgeschwindigkeit der Zinksulfid-Pigmentkörner beschleunigen.

Vorzugsweise weitere Ausgestaltungen der Erfindung sind in den Ansprüchen 3 bis 12 beschrieben.

Zur besseren Verarbeitung in den Polymeren kann das Zinksulfid-Pigment anorganisch bzw. organisch nachbehandelt werden, wie dies beispielsweise auch bei den bekannten eingangs angeführten Zinksulfid-Pigmenten sowie Titandioxid-Pigmenten üblich ist.

Unter synthetischen organischen Polymeren sind alle Duromere, Elastomere und Thermoplaste zu verstehen, die ggfs. noch Verarbeitungsmittel, wie Stabilisatoren, Weichmacher, organische und anorganische Pigmente, Farbstoffe, Glasfasern u.a. einzeln oder zu mehreren enthalten können.

Beim Einsatz des erfindungsgemäßen Zinksulfid-Pigments in Formteilen aus synthetischen organischen Polymeren können zusätzlich eines oder mehrere der Flammschutzmittel Aluminiumhydroxid, Antimonoxid, Magnesiumhydroxid, halogenierte organische Verbindungen u. a. verwendet werden.

Die mit der Erfindung erzielten Vorteile bestehen insbesondere darin, daß die unter Verwendung des erfindungsgemäßen Zinksulfids hergestellten Formteile aus synthetischen organischen Polymeren und Beschichtungen, wie Lacke, Farben, Fugen- und Dichtmassen eine hohe Transparenz für das Licht im sichtbaren Bereich sowie eine gute Remission von Infrarotstrahlen besitzen. Die Bewertung der Flammschutzeigenschaften ist identisch mit denjenigen, die mit dem vergleichsweise sehr viel feinkörnigeren im Stand der Technik beschriebener Zinksulfid-Pigmente erzielt werden.

Bei einer bevorzugten Ausgestaltung der Erfindung ist ein Gehalt an Zinksulfid-Pigment von 5 bis 35 Vol.%, bezogen auf das gefertigte Erzeugnis, vorgesehen. Dadurch lassen sich besonders gute Flammschutzeigenschaften, Transparenz im Bereich des sichtbaren Lichts und Remission von Infrarotstrahlen erreichen.

Das Zinksulfid-Pigment besitzt ein sehr niedriges Streuvermögen und keine Eigenfarbe; so daß es ein geringes Deckvermögen bei Einarbeitung in die Formteile und in die Beschichtungen hervorruft. Aus diesem Grund kann das Zinksulfid-Pigment in Kombination mit Farbpigmenten verwendet werden, ohne daß eine merkliche Aufhellung eintritt.

Die Erfindung ist nachstehend anhand eines Ausführungsbeispiels näher erläutert.

In einen 50 ml destilliertes Wasser enthaltenden Vorlagebehälter werden die eine Temperatur von 65 °C aufweisenden Lösungen aus ZnSO₄ (120 g/l Zn) und Na₂S (60 g/l Na₂S) gleichzeitig unter Rühren zugegeben, wobei die Zugabe der beiden Komponenten in den Vorlagebehälter so gesteuert wird, daß in der Suspension ein pH-Wert von 3 bis 4 herrscht.

Nach erfolgter Fällung des Zinksulfids wird unter Rühren der pH-Wert der Suspension durch weitere Zugabe von Na₂S-Lösung auf einen Wert von pH 7 bis 7,5 eingestellt und die Suspension danach 15 Minuten lang gerührt. Anschließend erfolgt die Filtration der Suspension und der gebildete Filterkuchen wird mit 6 Gew.% NaCl als Glühsalz bezogen auf den Zinksulfid-Gehalt versetzt und nach der Homogenisierung in einem handelsüblichen Mischer im Trockenschrank bei 130 °C getrocknet. Das so erhaltene Zwischenprodukt wird dann in einem Muffelofen bei einer Temperatur von 900 °C für die Dauer von 2 Stunden geglüht. Das geglühte Produkt wird anschließend in Wasser unter Rühren abgeschreckt und nach 10 Minuten Rührdauer mit 10 %iger Schwefelsäure auf einen pH-Wert von 2,5 bis 3,5 eingestellt, wobei das gffs. gebildete Zinkoxid und lösliche Salze herausgelöst werden. Abschließend wird die Suspension filtriert, gut gewaschen, der Filterkuchen bei 120 bis 150 °C im Trockenschrank getrocknet und zur Zerstörung der gebildeten Agglomerate in einer Stiftmühle gemahlen.

Zur Einstellung einer möglichst engen Kornverteilung kann die Suspension zur Abtrennung der Fein- und Grobkornanteile einer Hydrozyklonierung bzw. ähnlich wirkenden bekannten Trennverfahren unterworfen werden. Es ist auch möglich, zur Abtrennung der Fein- und Grobkornanteile das Mahlgut einer Sichtung, z. B. einer Luftstromsichtung, zu unterwerfen.

Das aus diese Weise hergestellte Zinksulfid-Pigment besitzt eine mittlere Korngröße von d₅₀ = 6 µm und ein relatives Streuvermögen (Ry) von 5,6.

Dem gegenüber weist das bekannte, eingangs beschriebene Zinksulfid-Pigment eine mittlere Teilchengröße d₅₀ = 0,35 µm und ein relatives Streuvermögen (Ry) von 55 auf.

Das Streuvermögen ist die Fähigkeit eines pigmentierten Stoffs, einen Teil des auffallenden Lichtes diffus zurückzuwerfen. Indem man dem Pigment die Ursache für die Lichtstreuung des pigmentieren Stoffs zuschreibt spricht man von Streuvermögen des Pigments. Die Bestimmung des relativen Streuvermögens von Weißpigmenten kann gemäß DIN 53165 erfolgen.

Zu Vergleichszwecken wurden Polyethylen (PE)-Folien mit einer Wanddicke von 50 um durch Blasen hergestellt, in die einmal 5 Gew.% des erfindungsgemäßen Zinksulfid-Pigments mit einer mittleren Korngröße von d₅₀ = 6 µm und des bekannten Zinksulfid-Pigments mit einer mittleren Korngröße von d₅₀ = 0,35 µm eingearbeitet wurden. An diesen Folien wurden die Remission (Kennwert für Transparenz), mit Y-Filter (Grünfilter) eines Dreibereichspektralphotometer die Transmission von Infrarotstrahlen für 3 Wellenlängenbereiche sowie das Brandverhalten mit Hilfe des Limiting-Oxygen-Index (LOI) gemäß DIN 22117 E ermittelt. Die Untersuchsergebnisse sind in der nachfolgenden Tabelle dargestellt.

| Versuch | Remission (Ry) | Transmission in Infrarot-Bereichen | | | Flammschutz LOI (%O₂) |
|---|---|---|---|---|---|
| | | 7-13 µm | 15-25 µm | 32-40 µm | |
| **1.** 5 Gew.% ZnS, d₅₀ 6 µm in PE | 13,8 | 50 - 60 | 60 | 55 | 24,5 % |
| **2.** 5 Gew.% ZnS, d₅₀ 0,35 µm in PE | 50,4 | 80 - 85 | 88 | 80 - 85 | 24,5 % |

Ein Vergleich der Untersuchsergebnisse zeigt, daß die Polyethylenfolien, die mit dem erfindungsgemäßen Zinksulfid-Pigment pigmentiert sind, gegenüber den Polyethylenfolien, in die das bekannten Zinksulfid-Pigment eingearbeitet war, eine deutlich niedrigere Remission und demzufolge eine bessere Transparenz besitzen. Es ist festzustellen, daß auch die Transmission von Infrarotstrahlen bei den Polyethylenfolien mit dem erfindungsgemäßen Zinksulfid-Pigment signifikant besser ist, während sich die Flammschutzeigenschaften nicht unterscheiden. Polyethylenfolien, die nicht mit dem Zinksulfid-Pigment pigmentiert sind, zeigen einen LOI-Wert von 5 %.

## Patentansprüche

1. Verfahren zur Herstellung von Zinksulfid-Pigment mit einer mittleren Korngröße d₅₀ aus dem Bereich von 1 bis 14 µm, indem Sulfid-Schwefel enthaltende Verbindung mit einer wäßrigen, Zinkverbindung enthaltenden Lösung zusammengebracht wird, das gefällte Zinksulfid getrocknet und 10 Minuten bis 4 Stunden bei einer Temperatur von 750 bis 1200 °C geglüht wird.

2. Verfahren nach Anspruch 1, gekennzeichnet durch die Zugabe von 0 zu 30 Gew.%, vorzugsweise 0,5 bis 25 Gew.% Glühsalz, bezogen auf den Gehalt an Zinksulfid.

3. Verfahren nach einem der Ansprüche 1 und 2, gekennzeichnet durch die Verwendung einer oder mehrerer der Zink-Verbindungen ZnSO₄, ZnCl₂, ZnO, Zn(OH)₂ und ZnCO₃.

4. Verfahren nach einem der Ansprüche 1 bis 3, gekennzeichnet durch die Verwendung einer oder mehrerer der Sulfid-Schwefel-Verbindungen Na₂S, K₂S, H₂S und (NH₄)₂S.

5. Verfahren nach einem der Ansprüche 1 bis 4, gekennzeichnet durch eine Glühung im Bereich von 800 - 1100 °C.

6. Verfahren nach einem der Ansprüche 1 bis 5, gekennzeichnet durch eine 30 Minuten bis 2,5 Stunden dauernde Glühbehandlung.

7. Verfahren nach einem der Ansprüche 1 bis 6, gekennzeichnet durch ein der Glühbehandlung nachfolgendes Abschrecken in Wasser und anschließende saure Behandlung bei einem pH-Wert von 2,0 bis 4,0.

8. Verfahren nach einem der Ansprüche 1 bis 7, gekennzeichnet durch die Verwendung eines oder mehrere der Glühsalze Alkali-, Erdalkali- und Zink-Verbindungen, wie NaCl, KCl, ZnCl₂, ZnSO₄ und MgCl₂.

9. Verfahren nach einem der Ansprüche 1 bis 8, gekennzeichnet durch eine zerkleinernde Behandlung, vorzugsweise durch Mahlen.

10. Verfahren nach einem der Ansprüche 1 bis 9, gekennzeichnet durch eine hydrothermale Behandlung der das gefällte Zinksulfid enthaltenden Suspension bei einem Druck von 50 bis 100 bar und einem Temperaturbereich von 80 bis 250 °C.

11. Verfahren nach einem der Ansprüche 1 bis 10, gekennzeichnet durch eine Behandlung der das gefällte Zinksulfid enthaltenden Suspension durch Klassierung, vorzugsweise durch Hydrozyklonierung.

12. Verfahren nach einem der Ansprüche 1 bis 11 gekennzeichnet durch eine Sichtung des zerkleinerten Zinksulfids, vorzugsweise durch Luftstromsichtung.

13. Verwendung von Zinksulfid-Pigment mit einer mittleren Korngröße d₅₀ aus dem Bereich 1 bis 14 µm, hergestellt, indem Sulfid-Schwefel enthaltende Verbindung mit einer wäßrigen, Zinkverbindung enthaltenden Lösung zusammengebracht, das gefällte Zinksulfid getrocknet und 10 Minuten bis 4 Stunden bei einer Temperatur von 750 bis 1200 °C geglüht wird, für den Einsatz in einer Menge von 5 bis 35 Vol.-% in aus synthetischen organischen Polymeren gefertigten Formteilen und in Beschichtungen, wie Lacken, Farben, Fugen- und Dichtungsmassen.

## Claims

1. A process for the production of zinc sulphide pigment with an average grain size d₅₀ within the range from 1 to 14 µm, by bringing together compound containing sulphide sulphur and an aqueous solution containing zinc compound, drying the precipitated zinc sulphide and annealing it for 10 minutes to 4 hours at a temperature of 750 to 1200°C.

2. A process according to Claim 1, characterised by the addition of 0 to 30% by weight, preferably 0.5 to 25% by weight, annealing salt, relative to the content of zinc sulphide.

3. A process according to one of Claims 1 and 2, characterised by the use of one or more of the zinc compounds ZnSO₄, ZnCl₂, ZnO, Zn(OH)₂ and ZnCO₃.

4. A process according to one of Claims 1 to 3, characterised by the use of one or more of the sulphide sulphur compounds Na₂S, K₂S, H₂S and (NH₄)₂S.

5. A process according to one of Claims 1 to 4, characterised by annealing in the range from 800 - 1100°C.

6. A process according to one of Claims 1 to 5, characterised by an annealing treatment which lasts 30 minutes to 2.5 hours.

7. A process according to one of Claims 1 to 6, characterised by quenching, succeeding the annealing treatment, in water and subsequent acid treatment at a pH value of 2.0 to 4.0.

8. A process according to one of Claims 1 to 7, characterised by the use of one or more of the annealing salts alkali, alkaline-earth and zinc compounds, such as NaCl, KCl, ZnCl₂, ZnSO₄ and MgCl₂.

9. A process according to one of Claims 1 to 8, characterised by a comminuting treatment, preferably by grinding.

10. A process according to one of Claims 1 to 9, characterised by a hydrothermal treatment of the suspension containing the precipitated zinc sulphide at a pressure of 50 to 100 bar and in a temperature range from 80 to 250°C.

11. A process according to one of Claims 1 to 10, characterised by a treatment of the suspension containing the precipitated zinc sulphide by grading, preferably by hydrocycloning.

12. A process according to one of Claims 1 to 11, characterised by classification of the comminuted zinc sulphide, preferably by air-stream classification.

13. The use of zinc sulphide pigment having an average grain size d₅₀ in the range from 1 to 14 µm, prepared by bringing together compound containing sulphide sulphur and an aqueous solution containing zinc compound, drying the precipitated zinc sulphide and annealing it for 10 minutes to 4 hours at a temperature of 750 to 1200°C, for use in a quantity of 5 to 35% by volume in shaped parts manufactured from synthetic organic polymers and in coatings, such as varnishes, paints, and jointing and sealing compounds.

## Revendications

1. Procédé de préparation de pigment au sulfure de zinc d'une granulométrie moyenne d₅₀ de l'ordre de 1 à 14 µm, qui consiste à réunir un composé contenant du soufre sous forme de sulfure et une solution aqueuse contenant un composé de zinc, à sécher le sulfure de zinc précipité et à le calciner à une température de 750 à 1200°C pendant 10 min à 4 h.

2. Procédé suivant la revendication 1, caractérisé par l'addition de 0 à 30 % en poids et, de préférence, de 0,5 à 25 % en poids d'un sel de calcination rapporté à la teneur en sulfure de zinc.

3. Procédé suivant l'une des revendications 1 et 2, caractérisé par l'utilisation d'un composé de zinc ou de plusieurs composés de zinc choisis parmi ZnSO₄, ZnCl₂, ZnO, Zn(OH)₂ et ZnCO₃.

4. Procédé suivant l'une revendications 1 à 3, caractérisé par l'utilisation d'un composé de soufre sous forme de sulfure ou de plusieurs composés de soufre sous forme de sulfure choisis parmi Na₂S, K₂S, H₂S et (NH₄)₂S.

5. Procédé suivant l'une des revendications 1 à 4, caractérisé par une calcination entre 800 et 1100°C.

6. Procédé suivant l'une des revendications 1 à 5, caractérisé par un traitement de calcination ayant une durée de 30 min à 2,5 h.

7. Procédé suivant l'une des revendications 1 à 6, caractérisé par un refroidissement dans l'eau venant après le traitement de calcination et ensuite par un traitement acide à un pH de 2,0 à 4,0.

8. Procédé suivant l'une des revendications 1 à 7, caractérisé par l'utilisation d'un sel de calcination ou de plusieurs sels de calcination choisis parmi les composés de métaux alcalins, les composés de métaux alcalino-terreux et les composés de zinc, comme NaCI, KCI, ZnCl₂, ZnSO₄ et MgCl₂.

9. Procédé suivant l'une des revendications 1 à 8, caractérisé par un traitement de fragmentation, de préférence par broyage.

10. Procédé suivant l'une des revendications 1 à 9, caractérisé par un traitement hydrothermique de la suspension contenant du sulfure de zinc précipité sous une pression de 50 à 100 bar et dans un intervalle de température de 80 à 250°C.

11. Procédé suivant l'une des revendications 1 à 10, caractérisé par un traitement de la suspension contenant le sulfure de zinc précipité par un criblage, de préférence par passage dans un hydrocyclone.

12. Procédé suivant l'une des revendications 1 à 11, caractérisé par un triage du sulfure de zinc fragmenté, de préférence par un triage par courant d'air.

13. Utilisation de pigment au sulfure de zinc ayant une granulométrie moyenne d₅₀ de l'ordre de 1 à 14 µm, préparé en réunissant un composé contenant du soufre sous forme de sulfure et une solution aqueuse contenant un composé de zinc, en séchant le sulfure de zinc précipité et en le calcinant à une température de 750 à 1200°C pendant 10 min à 4 h, pour le mettre en une quantité de 5 à 35 % en volume dans des pièces moulées en polymères organiques synthétiques et dans des revêtements comme des vernis, des colorants, des compositions de jointoiement et des compositions d'étanchéité.
